# EUROPÄISCHE PATENTSCHRIFT

(11) **EP 1 813 325 B1**
(45) Veröffentlichungstag und Bekanntmachung des Hinweises auf die Patenterteilung: **03.08.2011**
(21) Anmeldenummer: 07101467.4
(22) Anmeldetag: 31.01.2007
(51) Int. Cl.: A63F 9/10, H04N 1/387

(54) **Verfahren und System zur Herstellung eines Bildprodukts**
Method and system for creating a visual product
Procédé et système de fabrication d'un produit imagé

(30) Priorität: 31.01.2006 DE 102006004425
(43) Veröffentlichungstag der Anmeldung: 01.08.2007
(73) Patentinhaber: Weig GmbH, 92665 Altenstadt a.d. Waldnaab (DE)
(72) Erfinder: Weig, Norbert, 92711 Parkstein (DE)
(74) Vertreter: Lang, Christian

(56) Entgegenhaltungen:
- WO-A-98/42420
- JP-A- 11 076 602
- JP-A- 11 355 705
- US-A1- 2002 025 085
- US-A1- 2005 230 909

## Beschreibung

### GEBIET DER ERFINDUNG

Die vorliegende Erfindung betrifft ein Verfahren zur Herstellung eines Bildprodukts mit vorgegebener Bildgröße, insbesondere eines Puzzles sowie ein System hierfür.

### STAND DER TECHNIK

Puzzles sind als Unterhaltungsspiel und als Spiel zum Training der Geschicklichkeit und der Auffassungsgabe bei Jung und Alt seit langem beliebt. Allerdings kommt es für den Verkaufserfolg von Puzzles sehr stark auf das dargestellte Motiv an, da die Freude und der Spaß ein Puzzle zusammenzusetzen deutlich größer ist, wenn für den Puzzlespieler ein interessantes Motiv entsteht, welches er möglicherweise nach Fertigstellung des Puzzles als Bild zur Wanddekoration einsetzen kann. Hierbei hat es sich jedoch zunehmend als schwierig herausgestellt, die richtigen Motive zu finden, die für ein größeres Publikum interessant sind, da die Herstellung und Lagerhaltung einer Vielzahl von Kleinserien an Puzzles sowohl für die Hersteller als auch für den Einzelhandel nicht rentabel sind. Dieses Problem wird noch dadurch verschärft, dass üblicherweise Puzzles mit unterschiedlichen Teilezahlen, die wiederum in Größe und Formgebung variieren können, angeboten werden, um unterschiedliche Schwierigkeitsgrade für die verschiedenen Käuferschichten bereit zu stellen. So gibt es beispielsweise Kinderpuzzles ab einigen wenigen bis zu einigen zehn Teilen, während große Puzzles insbesondere für Erwachsene meist 500, 1000 oder mehr Teile aufweisen können.

Sofern also eine Vielzahl von Puzzles mit unterschiedlichen Motiven bei gleichzeitig unterschiedlichen Teilezahlen für den Handel bereitgehalten werden soll, muss eine sehr große Anzahl von verschiedenen Serien an Puzzles hergestellt und im Einzelhandel vorrätig gehalten werden. Dies stellt jedoch ein großes Problem dar, da dies einen hohen Aufwand, beispielsweise hinsichtlich des Lagerplatzes erfordert.

Aus diesem Grunde ist es seit einiger Zeit bekannt, Puzzles nach Einzelvorlage zu erstellen, so dass individuelle Motive des Kunden für die Puzzleherstellung verwendet werden können. Durch die inzwischen stark verbreitete Digitalfotografie ist es beispielsweise möglich über das weltweite Netz (World Wide Web WWW) individuelle Bilder an ein Fotolabor oder an einen sonstigen Hersteller von Puzzles zu übermitteln, so dass dieser aus der Vorlage ein Puzzle erstellen kann. Üblicherweise wird hierbei so vorgegangen, dass der Kunde ein Bild, welches ihm in einer bestimmten Größe bzw. Auflösung vorliegt, an eine Datenverarbeitungsanlage des Herstellers übermittelt, beispielsweise über das Internet (World Wide Web WWW) oder durch Übersendung von Speichermedien, auf denen das Bild gespeichert ist. Auch die Übersendung eines direkten Ausdrucks ist möglich. Hier muss der Hersteller notfalls das Bild einscannen. Gleichzeitig gibt der Kunde bekannt, welche Größe das Puzzle haben soll und der Hersteller vergrößert oder verkleinert die Bildvorlage entsprechend auf die vorgegebene Bildgröße, druckt diese Bildvorlage auf einen entsprechenden Träger, wie beispielsweise einen Karton, und schneidet dann das auf dem Karton aufgedruckte Bild in die entsprechende Einzelteile des Puzzles. Dies geschieht üblicherweise immer in der gleichen Art durch Ausstanzen, so dass für die Puzzles immer gleichgeformte Puzzleteile entstehen.

Ein wesentliches Problem hierin besteht jedoch im Hinblick auf die Bildgröße und Auflösung der Bildvorlage. Üblicherweise ist die Größe der Bildvorlage nicht identisch mit der Größe des gewünschten Puzzles. Darüber hinaus ist meist die Auflösung der Bildvorlage nicht in der Qualität, dass eine notwendige Vergrößerung der Bildvorlage auf die Puzzlebildgröße möglich ist. Dies führt dazu, dass das Puzzlebild eine schlechte Bildqualität aufweist.

Darüber hinaus sind Bildvorlagen aus dem privaten Bereich, die aufgrund der persönlichen Motive oftmals als Puzzlevorlage gewählt werden sollen, auch von der Bildkomposition nicht optimal für eine Puzzleherstellung geeignet sind. Insbesondere sind oft die Bildausschnitte unglücklich gewählt oder es sind störende Nebenabbildungen vorhanden, die, wenn sie nicht am Bildrand vorliegen, nicht durch einfaches Zuschneiden oder Ausschneiden beseitigt werden können. Selbst wenn sie am Bildrand vorliegen kann ein Zu- oder Ausschneiden oftmals nicht durchgeführt werden, da dann die Seitenverhältnisse der Vorlage so geändert werden, dass diese für die vorgegebenen Seitenverhältnisse des Puzzles nicht mehr geeignet ist.

Um das Problem des ungünstig gewählten Bildausschnitts abzumildern, ist es bereits auch bekannt, zusätzliche Rahmen über die Bildvorlagen zu kopieren, so dass das Puzzlebild durch eine Rahmenanordnung eingefasst ist. Dies ermöglicht nicht nur eine Vermeidung von unnötig großen Rändern bei schlecht gewähltem Bildausschnitt sondern ermöglicht zudem eine weitere Gestaltung und Aufwertung des Puzzlebildes.

Entsprechend ist es auch bekannt Texte in die Bildvorlage bzw. das Puzzlebild zu kopieren.

Darüber hinaus ist aus der US 2005/230909 A1 bekannt eine Puzzlemaschine bereit zu stellen, bei der das Bild einer Person als Puzzlemotiv direkt in der Maschine hergestellt wird.

Das Verfahren zur Herstellung eines Bildprodukts gemäß US 2005/230909 A1 umfasst folgende Schritte:
Bereitstellen einer ersten Datenverarbeitungsanlage mit Speichermitteln zur Speicherung von Bild-, Text-, Steuer- und/oder Programmdaten, Sende- und Empfangsmitteln zur Übermittlung von Bild-, Text-, Programm- und/oder Steuerdaten, und Verarbeitungsmitteln zur Verarbeitung von Bild- und/oder Textdaten,
Bereitstellen mindestens einer ersten Bilddatei und Steuern der Verarbeitungsmittel durch Eingabe von Steuerbefehlen mittels Eingabemitteln in der Datenverarbeitungsanlage,
Extrahieren von mindestens einem Bildbestandteil erster Art aus der ersten Bilddatei,
Kombinieren des mindestens einen Bildbestandteils erster Art mit mindestens einem Bildbestandteil zweiter Art zu einer zweiten Bilddatei und
Bereitstellen der zweiten Bilddatei zur Applikation auf dem Bildprodukt.

Damit ist jedoch die Variabilität der Motivwahl stark eingeschränkt.

Obwohl die oben geschilderten Maßnahmen der Bildaufwertung bereits zu guten Ergebnisse führen können, können damit die oben geschilderten Probleme bei mangelnder Bildqualität bzw. schlechtem Verhältnis von Bildgröße und Bildauflösung nicht beseitigt werden. Dadurch wird jedoch verhindert, dass individuelle Motive in einem größeren Umfang für die Puzzleherstellung verwendet werden.

Dies gilt im Übrigen nicht nur für die Herstellung von Puzzles, sondern auch bei der Herstellung von sonstigen Bildprodukten, bei denen individuelle Bilder auf bestimmten Produkten angeordnet werden, wobei eine bestimmte Bildgröße vorgegeben ist bzw. eingehalten werden muss, wie beispielsweise bei Bildtassen, T-Shirts, Poster, Mousepads, Grußkarten und dergleichen. Auch hier gilt, dass oftmals das Verhältnis zwischen vorhandener Bildauflösung und nötige Bildgröße für die Herstellung eines hochwertigen Bildproduktes nicht ausreichend ist.

### OFFENBARUNG DER ERFINDUNG

### TECHNISCHE AUFGABE

Es ist deshalb Aufgabe der vorliegenden Erfindung, die oben geschilderten Probleme des Standes der Technik zu beseitigen und eine hochwertige Herstellung von Bildprodukten mit vorgegebener Bildgröße, insbesondere von Puzzles zu ermöglichen. Insbesondere sollen ein Verfahren und ein System bereitgestellt werden, welches in einfacher und effektiver Weise die individuelle Herstellung eines Bildproduktes mit vorgegebener Bildgröße, insbesondere eines Puzzles mit hoher Bildqualität sowohl hinsichtlich der Auslösung als auch der Bildgestaltung ermöglicht.

### TECHNISCHE LÖSUNG

Die Erfindung geht aus von der Erkenntnis dass eine individuelle Bildgestaltung mit attraktiven persönlichen Motiven in der Weise realisiert werden kann, dass verschiedene Bildbestandteile miteinander zu einem Bild kombiniert werden, welches die erforderliche Qualität aufweist. Hierzu wird aus dem persönlichen Motiv, d. h. einer ersten Bilddatei, mindestens ein, vorzugsweise mehrere Bildbestandteile erster Art ausgewählt, die in dem späteren Bildprodukt, z. B. einem Puzzle, enthalten sein sollen. Diese Bildbestandteile erster Art werden mit Bildbestandteilen zweiter Art zu einem Bild verarbeitet, welches der vorgegebenen Bildgröße des Bildprodukts entspricht. Dies wird erfindungsgemäß über eine elektronische, insbesondere digitale Datenverarbeitungsanlage durchgeführt, welche Speichermittel zur Speicherung von Bild-, Text-, Steuer-, und/oder Programmdaten, vorzugsweise Sende- und Empfangsmittel zur Übermittlung von Bild-, Text-, Programmund/ oder Steuerdaten und Verarbeitungsmittel zur Verarbeitung der Bild- und/ oder Textdaten aufweist. Entsprechend muss erfindungsgemäß eine erste Bilddatei mit dem persönliche Bildmotiv in der Datenverarbeitungsanlage bereitgestellt werden, wobei dann nach Auswahl einer vorgegebenen Bildgröße für das Bildprodukt, beispielsweise der Auswahl einer Größe für das Puzzle und/oder Anzahl der Puzzleteile ein oder mehrere Bildbestandteile erster Art aus der ersten Bilddatei extrahiert werden und mit Bildbestandteilen zweiter Art zu einer zweiten Bilddatei kombiniert werden, welche ein Bild umfasst, das der vorgegebenen Bildgröße des Bildprodukts entspricht. Diese zweite Bilddatei kann dann zur Applikation auf dem Bildprodukt bereitgestellt werden, beispielsweise an eine Druckeinrichtung übergeben werden, die das Bild auf den entsprechenden Träger aufdruckt. Insgesamt wird somit mit dem erfindungsgemäßen Verfahren erreicht, dass eine Entkopplung zwischen der vorgegebenen Bildgröße des Bildprodukts und der Größe bzw. Auflösung der Bildvorlage stattfindet, da durch das Extrahieren entsprechend Bildbestandteile erster Art diese mit ihrer optimalen Größe und Auflösung in das zu produzierende Bild, d. h. in die zweite Bilddatei, eingebunden werden, ohne dass eine schwierige Veränderung der Bildvorlage notwendig wäre. Stattdessen werden die zweiten Bildbestandteile, mit denen die Bildbestandteile erster Art kombiniert werden, optimal auf die Bildgröße des Bildprodukts und das persönliche Motiv angepasst.

Das Extrahieren eines Bildbestandteiles erster Art kann beispielsweise durch Freischneiden mindestens einer Kontur der ersten Bilddatei erfolgen. Beispielsweise können Portraits, Abbildungen von Personen oder Gegenständen entlang ihrer Kontur aus der ersten Bilddatei herausgelöst und als Bildbestandteile erster Art konfiguriert werden. Alternativ oder zusätzlich ist es auch möglich, dass ein größerer Bereich oder die gesamte erste Bilddatei als Bildbestandteil erster Art konfiguriert wird. Die Bildimitationen unterscheiden sich hierbei von Bildanimationen im Wesentlichen dadurch, dass die Bildimitationen stärker auf der Vorlage basieren, während die Bildanimationen vollständige künstliche Bilder darstellen, für die Vorlage lediglich Anregungen gibt.

Bei einer weiteren bevorzugten Ausführungsform ist es selbstverständlich möglich, dass mehrere Bildbestandteile erster Art aus einer ersten Bilddatei oder aus mehreren ersten Bilddateien extrahiert werden oder dass jeweils nur ein Bildbestandteil erster Art aus mehreren ersten Bilddateien extrahiert wird. Hier sind sämtliche vorstellbaren Kombinationen möglich.

Der Bildbestandteil zweiter Art kann auf verschiedene Weise produziert werden.

Nach einer ersten Art ist es möglich, bestimmte Bildvorlagen in den Speichermitteln der Datenverarbeitungsanlage vorzusehen, in denen beispielsweise bereits Platzhalter für individuelle Bestandteile vorgesehen sein können, beispielsweise für Portraits von dort abgebildeten Personen und dergleichen. Neben Platzhaltern in den Bildvorlagen sind auch entsprechende Freiräume zur Überlagerung mit Bildbestandteilen erster Art denkbar.

Nach einer zweiten Möglichkeit können die Bildbestandteile zweiter Art durch eine Bildanimation gewonnen werden, so dass beispielsweise eine künstliche Landschaft anhand von bestimmten Rahmendaten, die beispielsweise durch den Nutzer vorgegeben sein können, durch die Verarbeitungsmittel der Datenverarbeitungslage erzeugt werden. Insbesondere können die Bildanimationen auch auf Komponenten der ersten Bilddatei beruhen, die nicht als Bildbestandteile erster Art ausgewählt worden sind, beispielsweise entsprechende Hintergründe, die für eine entsprechende Vergrößerung nicht die ausreichende Bildqualität aufweisen. Ausgehend von den dort vorliegenden Bildinformationen könnte dann die Bildanimation in vergleichbarer Weise gestaltet werden. Hierzu könnten insbesondere automatisch entsprechende Parameter und Kennwerte durch die Verarbeitungsmittel aus der ersten Bilddatei ausgelesen werden.

Die Bildanimationen entsprechend der Vorlage der ersten Bilddatei führen zu einer weiteren Möglichkeit der Bereitstellung von Bildbestandteilen zweiter Art. Dies entspricht Bildimitationen, die insbesondere basierend auf der ersten Bilddatei zu einer Verbesserung der Bildqualität führen können. Beispielsweise können durch die Verarbeitungsmittel Bereiche mit ähnlichen Bildinformationen identifiziert werden, die so ergänzt oder verändert werden, dass eine höhere Auflösung erzielt wird. Dies stellt praktisch eine Angleichung bzw. Extrapolation von benachbarten Bildpunkten auf zusätzlich erzeugte, dazwischen liegende Bildpunkte dar, um eine bessere Bildqualität bzw. Auflösung zu erreichen.

Nach einer weiteren Möglichkeit kann eine derartige Extrapolation auch dazu genutzt werden, dass die Bildbestandteile erster Art extrapoliert werden. Wenn beispielsweise die erste Bilddatei mit einem Teilbereich oder komplett als Bildbestandteil erster Art ausgewählt wird, kann durch Extrapolation der Randbereiche die vorgegebene Bildgröße des Bildprodukts erreicht werden, ohne dass die Bildvorlage, welche beispielsweise keine ausreichende Bildqualität zu einer Vergrößerung aufweist, entsprechend vergrößert werden müsste.

Die Kombination der Bildbestandteile erster und zweiter Art kann zumindest teilweise oder auch überwiegend durch komplementäre Ergänzung der Bildbestandteile erster und zweiter Art erfolgen. Zusätzlich oder alternativ ist auch eine Überlagerung der Bildbestandteile erster und zweiter Art möglich, wobei entweder der Bildbestandteil erster Art oder der Bildbestandteil zweiter Art im Vordergrund angeordnet ist.

Die Bildbestandteile erster und/oder zweiter Art können auch vor und/oder nach der Kombination entsprechend bekannter Methoden der Bildbearbeitung bearbeitet werden, wobei hier beispielsweise die Helligkeit verändert, der Kontrast ausgebessert und dergleichen durchgeführt werden kann. Insbesondere sind auch Verfremdungen, z. B. durch Einfärbung von Bereichen oder dergleichen denkbar.

Zur Vereinfachung des Verfahrens ist es insbesondere vorteilhaft, eine zweite Datenverarbeitungsanlage vorzusehen, in der die Bereitstellung mindestens einer ersten Bilddatei und/oder das Steuern der Verarbeitungsmittel durch Eingabe von Steuerbefehlen in Eingabemitteln erfolgt. Die zweite Datenverarbeitungsanlage kann insbesondere räumlich getrennt von der ersten Datenverarbeitungsanlage angeordnet sein, so dass der Nutzer von zu Hause aus sein Bildprodukt zusammenstellen und bearbeiten kann. Hierbei kann insbesondere eine unmittelbare Verbindung zwischen der zweiten Datenverarbeitungsanlage und der ersten Datenverarbeitungsanlage, beispielsweise über ein Netzwerk vorliegen. Alternativ kann auch eine zweite Datenverarbeitungsanlage zum Eingeben der ersten Bilddatei und von Steuerbefehlen zur Verarbeitung vorgesehen sein, die getrennt von einer ersten Datenverarbeitungsanlage vorgesehen ist und nicht ständig mit dieser verbunden ist, wobei dann die Übermittlung der ersten Bilddatei und der Steuerbefehle beispielsweise über entsprechende Speichermittel erfolgen kann und die Endverarbeitung nach Übermittlung in der ersten Datenverarbeitungsanlage erfolgt.

Bevorzugt ist jedoch, dass eine Datenfernübertragung zwischen der ersten und der zweiten Datenverarbeitungsanlage stattfindet, und zwar insbesondere während der Bildverarbeitung (online-Modus), so dass insbesondere auch die zweite Bilddatei bestehend auch der Kombination der Bildbestandteile erster und zweiter Art unmittelbar auf der zweiten Datenverarbeitungsanlage dargestellt werden kann. Auf diese Weise kann der Nutzer sofort ersehen, wie das fertige Bildprodukt aufgrund seiner Eingaben aussehen wird. Entsprechend können auch korrigierende Eingriffe und Änderungen vorgenommen werden.

Nach einem zweiten Aspekt der vorliegenden Erfindung, für den auch selbstständig Schutz begehrt wird, kann nicht nur das Puzzlebild individuell bearbeitet werden, sondern auch die Teilung der zweiten Bilddatei, die als Puzzlebild verwendet wird, kann variabel nach Vorgaben beeinflusst werden, die der Nutzer mittels Eingabemittel in die erste oder zweite Datenverarbeitungsanlage eingibt. Damit wird beispielsweise erreicht, dass eine Teilung des Puzzlebildes in Bereichen, in denen besondere Einzelheiten des Bildes dargestellt sind, vermieden werden kann.

Entsprechend können die Vorgaben für die Teilung der zweiten Bilddatei bzw. des Puzzlebildes entsprechende Bereiche definieren, in denen keine Teilung des Bildes erfolgen soll. Auf diese Weise kann der Nutzer einfach angeben, dass in bestimmten Bereichen kein Schnitt oder keine Trennung des Bildes vorliegen soll.

Im Übrigen kann unter Berücksichtigung der Vorgaben des Nutzers die Teilung jedoch automatisch insbesondere nach einer vorgegebenen Zufallsbedingung erfolgen.

Alternativ ist auch vorstellbar, dass die Teilung durch die Vorgaben exakt festgelegt ist, insbesondere die Trennungslinien über entsprechende Eingabemittel genau vorgezeichnet werden können. Auf diese Weise ist auch eine individuelle Gestaltung der Puzzleteilung möglich.

Zur physikalischen Trennung des Bildes auf dem Puzzleträger können entsprechende Schneidverfahren, die eine individuelle Schnittführung erlauben, eingesetzt werden.

Nach einem dritten Aspekt der vorliegenden Erfindung soll ein System zur Herstellung eines Bildproduktes mit vorgegebener Bildgröße, insbesondere eines Puzzles, unter Schutz gestellt werden, welches nach dem vorhergehend beschriebenen Verfahren arbeitet, wobei insbesondere zwei Datenverarbeitungsanlagen, die über eine Datenfernverbindung miteinander verbunden sind, vorgesehen sind.

Die Datenfernverbindung kann beispielsweise über ein Netzwerk, insbesondere auch ein zumindest teilweise drahtloses Netzwerk realisiert werden.

Insbesondere ist es vorteilhaft, wenn die zweite Datenverarbeitungsanlage ein mobiler Computer, ein Smart Phone, ein hand-held Computer oder dergleichen ist. Insbesondere bei Smart Phones mit Kamerafunktionen können damit Bilddaten direkt weiterverarbeitet werden.

### KURZBESCHREIBUNGEN DER ZEICHNUNGEN

Weitere Vorteile, Kennzeichnung und Merkmale der vorliegenden Erfindung werden bei der nachfolgenden detaillierten Beschreibung von Ausführungsbeispielen deutlich. Die Zeichnungen zeigen hierbei in rein schematischer Weise in
- Fig. 1: einen Schemaablauf für die Herstellung eines ersten Bildprodukts; und in
- Fig. 2: den Schemaablauf für die Herstellung eines zweiten Bildprodukts.

### BEVORZUGTE AUSFÜHRUNGSFORMEN DER ERFINDUNG

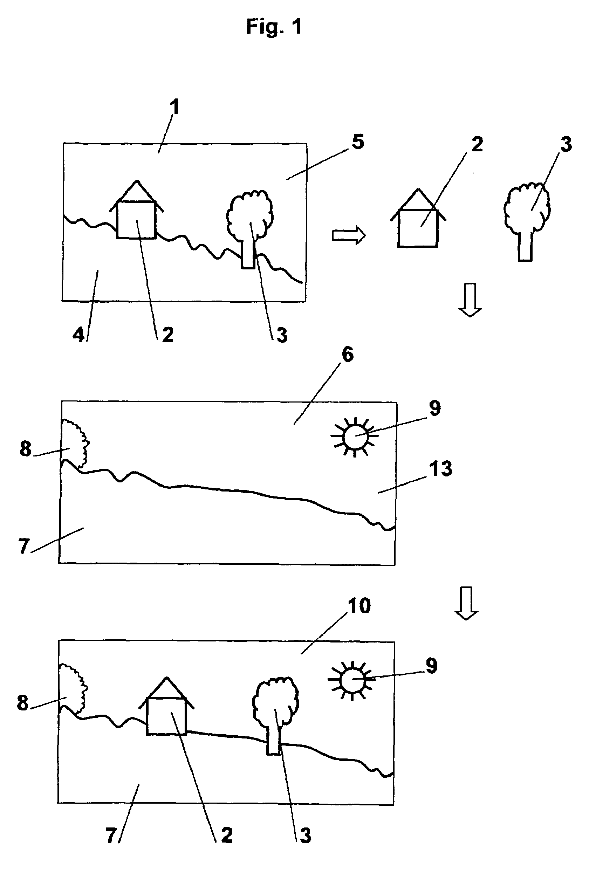

Die Figur 1 zeigt in schematischer Weise einen Ablauf der Herstellung eines ersten Bildproduktes. Eine erste Bilddatei 1, die eine bestimmte Bildgröße mit einer bestimmten Auflösung aufweist, wird hierbei in einer Datenverarbeitungsanlage bereitgestellt, wobei durch die dort vorgesehenen Verarbeitungsmittel Bildbestandteile erster Art 2,3 extrahiert werden.

Die erste Bilddatei 1 zeigt hierbei beispielsweise ein Haus 2, einen Baum 3, den Grund 4, auf dem das Haus 2 und der Baum 3 stehen, sowie den Hintergrundhimmel 5. Die Bildgröße der ersten Bilddatei 1 ist für das geplante Puzzle zu klein und von der Bildqualität her nicht geeignet, um auf die vorgegebene Bildgröße des Puzzles hochvergrößert zu werden.

Gemäß dem erfindungsgemäßen Verfahren werden durch Freischneiden entlang der Konturen das Haus 2 und der Baum 3 als Beispiele für individuelle und persönliche Bildbestandteile konfiguriert und aus der ersten Bilddatei extrahiert.

Zugleich erkennen die Verarbeitungsmittel die Strukturen des Bildhintergrundes nämlich den Grund 4 und den Hintergrundhimmel 5 und erzeugen in einer Bildanimation einen Bildbestandteil zweiter Art 6, welcher in der vorgegebenen Bildgröße des Puzzles ebenfalls einen Grund 7 und einen Hintergrundhimmel 13 aufweist. Zusätzlich sind zur Füllung und besseren Gestaltung des Bildes nach Weisung des Nutzers ein Strauch 8 und ein Himmelskörper 9 erzeugt worden. Diese Bildbestandteile zweiter Art 6 werden nun mit den Bildbestandteilen erster Art 2,3 zu einer zweiten Bilddatei 10 kombiniert, wobei die Bildbestandteile erster Art 2, 3 insbesondere in unveränderter Größe mit den Bildbestandteilen zweiter Art, die der vorgegebenen Größenordnung des Bildprodukts entsprechen, zusammen gefügt werden. Die zweite Bilddatei wird über entsprechende Druckeinrichtungen auf dem Puzzleträger, beispielsweise einem Pappkarton, aufgedruckt um anschließend in vorgegebener Weise oder erfindungsgemäß nach individueller Vorgabe in einzelne Puzzleteile getrennt zu werden.

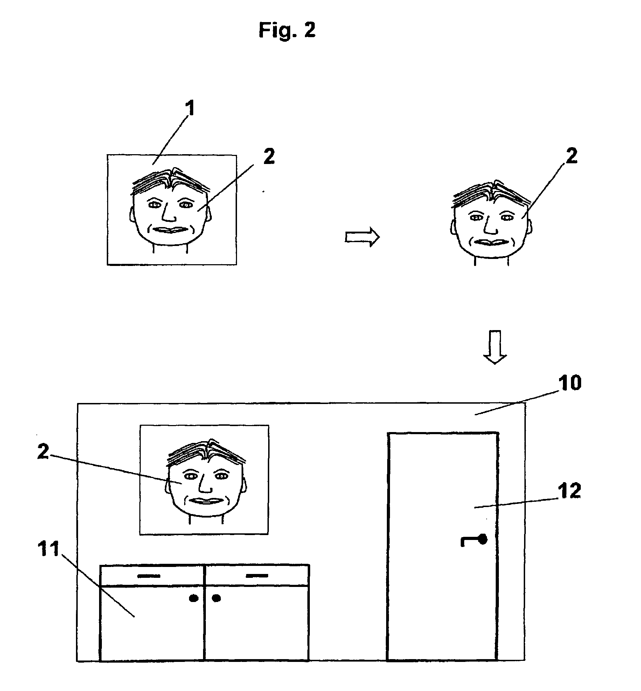

Die Figur 2 zeigt eine zweite Ausführungsform des erfindungsgemäßen Verfahrens, wobei wiederum eine erste Bilddatei 1 mit einem individuellen, persönlichen Motiv, d. h. einem Bildbestandteil erster Art, in diesem Fall einem Portrait 2 bereitgestellt wird. Ähnlich, wie beim Ausführungsbeispiel der Figur 1 wird auch hier in der Datenverarbeitungsanlage das persönliche, individuelle Motiv in Form des Portraits 2 freigeschnitten und extrahiert. Alternativ ist es auch möglich die erste Bilddatei vollständig zu übernehmen.

Als Bildbestandteil zweiter Art wird ein vorgegebenes Bild bereitgestellt, welches beispielsweise eine Wand eines Zimmers zeigt, in dem eine Kommode 11 und eine Tür 12 angeordnet ist. Das Portrait 2 wird hier in unveränderter Größe in einen Platzhalter eines Bilderrahmens eingefügt. Der Unterschied zur Ausführungsform der Figur 1 besteht darin, dass der Bildbestandteil zweiter Art als vorab gespeicherte Bildvorlage zur Verfügung gestellt wird, welche mit dem persönlichen Motiv, nämlich dem Portrait 2 zur zweiten Bilddatei 10 kombiniert wird.

Obwohl die vorliegende Erfindung anhand der beide Ausführungsbeispiele detailliert beschrieben worden ist, ist klar, dass dadurch keine Einschränkung des Schutzbereichs verbunden ist, sondern dass sämtliche Kombinationen und Gestaltungen, die durch die Patentansprüche definiert sind, möglich sind.

## Patentansprüche

1. Verfahren zur Herstellung eines Bildprodukts mit vorgegebener Bildgröße umfassend folgende Schritte:
• Bereitstellen einer ersten Datenverarbeitungsanlage mit Speichermitteln zur Speicherung von Bild-, Text-, Steuer- und/oder Programmdaten, Sende- und Empfangsmitteln zur Übermittlung von Bild-, Text-, Programm- und/oder Steuerdaten, und Verarbeitungsmitteln zur Verarbeitung von Bild- und/oder Textdaten,
• Auswahl einer vorgegebenen Bildgröße,
• Bereitstellen mindestens einer ersten Bilddatei (1) in der Datenverarbeitungsanlage,
• Extrahieren von mindestens einem Bildbestandteil (2,3) erster Art aus der ersten Bilddatei,
• Kombinieren des mindestens einen Bildbestandteils erster Art mit mindestens einem Bildbestandteil zweiter Art (6) zu einer zweiten Bilddatei (10), welche ein Bild umfasst, das der vorgegebenen Bildgröße des Bildprodukts entspricht, und
• Bereitstellen der zweiten Bilddatei zur Applikation auf dem Bildprodukt,
wobei das Bereitstellen mindestens einer ersten Bilddatei und/oder das Steuern der Verarbeitungsmittel durch Eingabe von Steuerbefehlen mittels Eingabemitteln in einer zweiten Datenverarbeitungsanlage erfolgt, die räumlich getrennt von der ersten Datenverarbeitungsanlage ist, und wobei mindestens eine Bilddatei und/oder die Steuerbefehle als Datenpaket von der zweiten Datenverarbeitungsanlage zur ersten Datenverarbeitungsanlage übermittelt werden.

2. Verfahren nach Anspruch 1,
**dadurch gekennzeichnet, dass**
das Extrahieren eines Bildbestandteils (2,3) erster Art durch Freischneiden mindestens einer Kontur der ersten Bilddatei (1) oder Ausschneiden eines Teils der oder Übernehmen der ersten Bilddatei erfolgt.

3. Verfahren nach einem der vorhergehenden Ansprüche,
**dadurch gekennzeichnet, dass**
mehrere Bildbestandteile (2,3) erster Art extrahiert und/oder mehrere erste Bilddateien (1) bereitgestellt werden.

4. Verfahren nach einem der vorhergehenden Ansprüche,
**dadurch gekennzeichnet, dass**
die Bildbestandteile (2,3) zweiter Art aus einer Gruppe umfassend Bildvorlagen, Bildanimationen, Bildimitationen, insbesondere von Teilen der ersten Bilddatei, oder Extrapolationen der Bildbestandteile erster Art ausgewählt werden.

5. Verfahren nach einem der vorhergehenden Ansprüche,
**dadurch** gekennzeichet, dass
die Kombination der Bildbestandteile erster und zweiter Art zumindest teilweise, vorzugsweise überwiegend durch komplementäre Ergänzung und/oder Überlagerung der Bildbestandteile erster und zweiter An erfolgt.

6. Verfahren nach einem der vorhergehenden Ansprüche,
**dadurch gekennzeichnet, dass**
die Bildbestandteile erster und/oder zweiter Art vor und/oder nach der Kombination bearbeitet werden.

7. Verfahren nach einem der vorhergehenden Ansprüche,
**dadurch gekennzeichnet, dass**
das Übermitteln mindestens einer ersten Bilddatei und/oder von Steuerbefehlen über Datenfernübertragung von der zweiten Datenverarbeitungsanlage zur ersten Datenverarbeitungsanlage erfolgt.

8. Verfahren nach einem der vorhergehenden Ansprüche,
**dadurch gekennzeichnet, dass**
die zweite Bilddatei (10) zur Darstellung auf Ausgabemittteln bereitgestellt wird.

9. Verfahren nach einem der vorhergehenden Ansprüche,
**dadurch gekennzeichnet, dass**
die Darstellung der zweiten Bilddatei über eine Datenfernübertragung in der zweiten Datenverarbeitungsanlage erfolgt.

10. Verfahren nach einem der vorhergehenden Ansprüche,
**dadurch gekennzeichnet, dass**
eine Bildbearbeitung der zweiten Bilddatei (10) erfolgt.

11. Verfahren nach einem der vorhergehenden Ansprüche,
**dadurch gekennzeichnet, dass**
die Kombination der Bildbestandteile erster und zweiter Art und/oder die Bilderverarbeitung online erfolgt.

12. Verfahren nach einem der vorhergehenden Ansprüche,
**dadurch gekennzeichnet, dass**
das Bildprodukt ein Puzzle ist.

13. Verfahren nach einem der vorhergehenden Ansprüche,
**dadurch gekennzeichnet, dass**
die Teilung der zweiten Bilddatei (10) in eine Vielzahl von Puzzleteilen variabel nach Vorgaben für die Verarbeitungsmittel erfolgt, welche mittels Eingabemittel von dem Nutzer eingegeben worden sind.

14. Verfahren nach einem der vorhergehenden Ansprüche,
**dadurch gekennzeichnet, dass**
das Bildprodukt ein Puzzle ist und die Herstellung des Puzzles folgende Schritte umfasst:
• Bereitstellen einer ersten Datenverarbeitungsanlage mit Speichermitteln zur Speicherung von Bild-, Text-, Steuer- und/oder Programmdaten und Verarbeitungsmitteln zur Verarbeitung von Bild- und/oder Textdaten,
• Bereitstellen einer Bilddatei zur Applikation auf dem Puzzle
wobei
die Teilung der Bilddatei (10) in eine Vielzahl von Puzzleteilen variabel mit individueller Schnittführung nach Vorgaben für die Verarbeitungsmittel erfolgt, welche mittels Eingabemittel von dem Nutzer eingegeben worden sind.

15. Verfahren nach Anspruch 14,
**dadurch gekennzeichnet, dass**
die Vorgaben Bereiche umfassen, in welchen keine Teilung des Bildes erfolgt.

16. Verfahren nach Anspruch 14 oder 15,
**dadurch gekennzeichnet, dass**
die Teilung unter Berücksichtigung der Vorgaben nach einer vorgegebenen Zufallsbedingung erfolgt.

17. Verfahren nach Anspruch 14 oder 15,
**dadurch gekennzeichnet, dass**
die Teilung durch die Vorgaben exakt festgelegt ist, insbesondere über Eingabemittel die Trennungslinien genau vorgezeichnet sind.

18. System zur Herstellung eines Bildprodukts mit vorgegebener Bildgröße, insbesondere eines Puzzles, nach dem Verfahren nach einem der vorhergehenden Ansprüche, mit mindestens zwei Datenverarbeitungsanlagen, die über eine Datenfernverbindung miteinander verbunden sind.

19. System nach Anspruch 18,
**dadurch gekennzeichnet, dass**
die Datenfernverbindung über ein Netzwerk, insbesondere ein zumindest teilweise drahtloses Netzwerk realisiert ist.

20. System nach Anspruch 18 oder 19,
**dadurch gekennzeichnet**, das
die zweite Datenverarbeitungsanlage ein mobiler Computer, ein Smartphone oder dergleichen ist.

21. System nach einem der Ansprüche 18 bis 20,
**dadurch gekennzeichnet, dass**
die Programmdaten zur Durchführung des Verfahrens sowohl auf der ersten Datenverarbeitungsanlage als auch der zweiten Datenverarbeitungsanlage oder nur auf der ersten Datenverarbeitungsanlage vorgesehen sind.

## Claims

1. Method of producing an image product of default image size comprising the following steps:
• Provision of a first data processing system having storage means for storing image, text, control and/or program data, transmitting and receiving means for transmission of images, text, program and/or control data, and processing means for processing image and/or text data,
• Selection of a default image size,
• Provision of at least a first image file (1) in the data processing system,
• Extraction of at least one image component (2, 3) of the first kind from the first image file,
• Combining of the at least one image component of the first kind with at least one image component of the second kind (6) to form a second image file (10) which comprises an image which corresponds to the default image size of the image product, and
• Provision of the second image file for applying to the image product,
**wherein**
the provision of at least a first image file and/or the controlling of the processing means proceeds by entering control commands by means of input means in a second data processing system which is physically separated from the first data processing system, and wherein at least one image file and/or the control commands are transmitted as a data package from the second data processing system to the first data processing system.

2. The method of claim 1,
**characterised by** the fact that
the extraction of an image component (2, 3) of the first kind by cutting out at least one outline of the first image file (1) or cutting out apart of, or taking over, the first image file.

3. Method in accordance with any of the preceding claims,
**characterised by** the fact that
several image components (2, 3) of the first type are extracted and/or several first image files (1) are provided.

4. Method in accordance with any of the preceding claims,
**characterised by** the fact that
the image components (2, 3) of the second kind are selected from a group comprising master images, image animations, image imitations, especially of parts of the first image file, or extrapolations of the image components of the first type.

5. Method in accordance with any of the preceding claims,
**characterised by** the fact that
combining of the image components of the first and second kind proceeds, at least partially, preferably predominantly by complementing and/or superposing the image components of the first and second kind.

6. Method in accordance with any of the preceding claims,
**characterised by** the fact that
the image components of the first and/or second kind are processed before and/or after combination.

7. Method in accordance with any of the preceding claims,
**characterised by** the fact that
transmission of at least a first image file and/or control commands proceeds via remote data transmission from the second data processing system to the first data processing system.

8. Method in accordance with any of the preceding claims,
**characterised by** the fact that
the second image file (10) is provided for presentation on display means.

9. Method in accordance with any of the preceding claims,
**characterised by** the fact that
presentation of the second image file proceeds via remote data transmission in the second data processing system.

10. Method in accordance with any of the preceding claims,
**characterised by** the fact that
image processing of the second image file (10) takes place.

11. Method in accordance with any of the preceding claims,
**characterised by** the fact that
combining of the image components of the first and second kind and/or image processing are carried out online.

12. Method in accordance with any of the preceding claims,
**characterised by** the fact that
the image product is a puzzle.

13. Method in accordance with any of the preceding claims,
**characterised by** the fact that
the division of the second image file (10) into a plurality of puzzle pieces proceeds in a variable manner according to the specifications for the processing means, which specifications the user has entered via input means.

14. Method in accordance with any of the preceding claims,
**characterised by** the fact that
• the image product is a puzzle and production of the puzzle comprises the following steps:
• Provision of a first data processing system having storage means for storing image, text, control and/or program data and processing means for processing image and/or text data,
• Provision of an image file for application to the puzzle
**wherein**
the division of the image file (10) into a plurality of puzzle pieces proceeds in a variable manner with custom editing to specifications for the processing means, which specifications the user has entered via input means.

15. The method of claim 14,
**characterised by** the fact that
the specifications comprise areas in which no division of the image occurs.

16. The method of claim 14 or 15,
**characterised by** the fact that
division proceeds, with allowance for the specifications, under a default random condition.

17. The method of claim 14 or 15,
**characterised by** the fact that
the division is precisely determined by the specifications, in particular, the dividing lines are pre-drawn precisely by input means.

18. System for producing an image product of given image size, especially a puzzle, by the method in accordance with any of the preceding claims, with at least two data processing systems that are connected to each other via a remote data link.

19. The system of claim 18,
**characterised by** the fact that
the remote data link is realised via a network, especially an at least partially wireless network.

20. System in accordance with claim 18 or 19,
**characterised by** the fact that
the second data processing system is a mobile computer, a smart-phone and the like.

21. System according to any of claims 18 to 20,
**characterised by** the fact that
the program data for implementing the method are provided both on the first data processing system and on the second data processing system or only on the first data processing system.

## Revendications

1. Procédé de fabrication d'un produit image avec une grandeur d'image prédéfinie comprenant les étapes suivantes :
- mise à disposition d'une première installation de traitement de données avec des moyens de mémorisation pour mémoriser des données d'image, de texte, de commande et/ou de programme, des moyens d'émission et de réception pour transmettre des données d'image, de texte, de commande et/ou de programme et des moyens de traitement pour le traitement de données d'image et/ou de texte,
- sélection d'une grandeur d'image prédéfinie,
- mise à disposition d'au moins un premier fichier image (1) dans l'installation de traitement de données,
- extraction d'au moins un composant d'image (2, 3) du premier type du premier fichier image,
- combinaison du premier composant d'image du premier type qui existe au moins avec au moins un composant d'image du second type (6) en un second fichier image (10) qui comprend une image qui correspond à la grandeur d'image prédéfinie du produit image et
- mise à disposition du second fichier image pour l'application sur le produit image,
la mise à disposition d'au moins un premier fichier image et/ou la commande des moyens de traitement se faisant en entrant des instructions de commande au moyen des moyens d'entrée dans une seconde installation de traitement des données qui est séparée dans l'espace de la première installation de traitement des données et au moins un fichier image et/ou les instructions de commande étant transmises comme paquet de données par la seconde installation de traitement des données à la première installation de traitement des données.

2. Procédé selon la revendication 1,
**caractérisé en ce que**
l'extraction d'un composant d'image (2, 3) du premier type se fait en libérant au moins un contour du premier fichier image (1) en le découpant ou en découpant une partie ou en adoptant le premier fichier image.

3. Procédé selon l'une des revendications précédentes,
**caractérisé en ce**
**que** plusieurs composants d'image (2, 3) du premier type sont extraits et/ou plusieurs premiers fichiers image (1) sont mis à disposition.

4. Procédé selon l'une des revendications précédentes,
**caractérisé en ce**
**que** les composants d'image (2, 3) du second type sont sélectionnés dans un groupe comprenant des modèles d'image, des animations d'image, des imitations d'image, en particulier de parties du premier fichier image, ou des extrapolations des composants d'image du premier type.

5. Procédé selon l'une des revendications précédentes,
**caractérisé en ce**
**que** la combinaison des composants d'image du premier et du second type se fait au moins partiellement, de préférence principalement, par complétion complémentaire et/ou superposition des composants d'image du premier et du second type.

6. Procédé selon l'une des revendications précédentes,
**caractérisé en ce**
**que** les composants d'image du premier et/ou du second type sont traités avant et/ou après la combinaison.

7. Procédé selon l'une des revendications précédentes,
**caractérisé en ce**
**que** la transmission d'au moins un premier fichier image et/ou d'instructions de commande se fait par télétransmission de la seconde installation de traitement de données à la première installation de traitement de données.

8. Procédé selon l'une des revendications précédentes,
**caractérisé en ce**
**que** le second fichier image (10) est mis à disposition pour la représentation sur des moyens de sortie.

9. Procédé selon l'une des revendications précédentes,
**caractérisé en ce**
**que** la représentation du second fichier image se fait par une télétransmission de données dans la seconde installation de traitement de données.

10. Procédé selon l'une des revendications précédentes,
**caractérisé en ce**
**qu'**un traitement de l'image du second fichier image (10) est réalisé.

11. Procédé selon l'une des revendications précédentes,
**caractérisé en ce**
**que** la combinaison des composants d'image du premier et du second type et/ou le traitement des images se fait en ligne.

12. Procédé selon l'une des revendications précédentes,
**caractérisé en ce**
**que** le produit image est un puzzle.

13. Procédé selon l'une des revendications précédentes,
**caractérisé en ce**
**que** la division du second fichier image (10) est effectuée en une multitude de pièces de puzzle de manière variable selon des indications préalables pour les moyens de traitement qui ont été entrées par l'utilisateur au moyen des moyens d'entrée.

14. Procédé selon l'une des revendications précédentes,
**caractérisé en ce**
**que** le produit image est un puzzle et la fabrication du puzzle comprend les étapes suivantes :
- mise à disposition d'une première installation de traitement de données avec des moyens de mémorisation pour mémoriser des données d'image, de texte, de commande et/ou de programme et des moyens de traitement pour le traitement de données d'image et/ou de texte,
- mise à disposition d'un fichier image pour l'application sur le puzzle la division du fichier image (10) en une multitude de pièces de puzzle étant réalisée de manière variable avec un guidage de coupe individuel selon des indications préalables pour les moyens de traitement qui ont été entrées par l'utilisateur au moyen des moyens d'entrée.

15. Procédé selon la revendication 14,
**caractérisé en ce**
**que** les indications préalables comprennent des zones dans lesquelles aucune division de l'image n'est réalisée.

16. Procédé selon la revendication 14 ou 15,
**caractérisé en ce**
**que** la division est effectuée en tenant compte des indications préalables selon une condition aléatoire prédéfinie.

17. Procédé selon la revendication 14 ou 15,
**caractérisé en ce**
**que** la division est fixée exactement par les indications préalables, en particulier par des moyens d'entrée, les lignes de séparation étant tracées avec précision.

18. Système pour la fabrication d'un produit image avec une grandeur d'image prédéfinie, en particulier d'un puzzle, selon le procédé selon l'une des revendications précédentes, avec au moins deux installations de traitement de données qui sont reliées l'une à l'autre par une ligne de télétransmission de données.

19. Système selon la revendication 18,
**caractérisé en ce**
**que** la ligne de télétransmission de données est réalisée par un réseau, en particulier par un réseau au moins partiellement sans fil.

20. Système selon la revendication 18 ou 19,
**caractérisé en ce**
**que** la seconde installation de traitement des données est un ordinateur portable, un smartphone ou similaire.

21. Système selon l'une des revendications 18 à 20,
**caractérisé en ce**
**que** les données de programme sont prévues pour l'exécution du procédé aussi bien sur la première installation de traitement de données que sur la seconde installation de traitement de données ou seulement sur la première installation de traitement de données.
